# EUROPÄISCHE PATENTSCHRIFT

(11) **EP 2 540 438 B1**
(45) Veröffentlichungstag und Bekanntmachung des Hinweises auf die Patenterteilung: **29.05.2013**
(21) Anmeldenummer: 11172350.8
(22) Anmeldetag: 01.07.2011
(51) Int. Cl.: B23Q 1/76

(54) **Lünette**
Stationary support
Lunette

(43) Veröffentlichungstag der Anmeldung: 02.01.2013
(73) Patentinhaber: SMW-AUTOBLOK Spannsysteme GmbH, 88074 Meckenbeuren (DE)
(72) Erfinder: Maurer, Eckhard, 88094 Oberteuringen (DE); Marquart, Jürgen, 88677 Markdorf (DE); Scheming, Robert, 88677 Markdorf (DE)
(74) Vertreter: Engelhardt & Engelhardt

(56) Entgegenhaltungen:
- EP-A1- 0 554 506
- EP-A1- 2 191 932
- GB-A- 2 089 708
- US-A- 2 160 378

## Beschreibung

Die Erfindung bezieht sich auf eine Lünette zur Zentrierung eines rotationssymmetrischen Werkstückes im Raum nach dem Oberbegriff des Patentanspruches 1.

Eine solche lünette ist z.B. aus dem Patentdokument GB-A-2089708 bekannt.

Derartige Lünetten werden zur Abstützung von rotationssymmetrischen Werkstücken an Werkzeugmaschinen seit Jahrzehnten eingesetzt. Insbesondere bei schweren und langen rotationssymmetrischen Werkstücken ist es notwendig, diese im Raum zentrisch durch eine oder mehrere voneinander beabstandete Lünetten zu fixieren, um die Durchbiegung des Werkstückes zu verhindern. Die Werkstücke werden nämlich durch die Eigengewichtskraft durchgebogen, und zwar insbesondere wenn diese zur spanabhebenden Bearbeitung rotieren.

Mittels einer Vielzahl von Bearbeitungsschritten entstehen zudem zusätzliche Bearbeitungskräfte, die auf die Werkstücke einwirken und durch die die zentrische Positionierung des Werkstückes verändert werden könnten. Durch die bekannten Lünetten soll demnach verhindert sein, dass durch die Bearbeitungskräfte, die auf die Werkstücke einwirken, solche Positionsveränderungen eintreten.

Durch die spanabhebende Bearbeitung reduziert sich die Gewichtskraft der Werkstücke, wodurch oftmals ebenfalls eine Positionsveränderung stattfindet, so dass die Lünetten nach einer bestimmten Reduzierung der Gewichtskraft der Werkstücke erneut aufzumachen sind, um die Werkstücke derart im Raum zu positionieren, dass die Längsachse des eingespannten Werkstückes auf einer Geraden verläuft, ohne das von dieser Zentrumsachse eine Abweichung vorliegt.

Aus der EP 0 554 506 B1 ist eine Lünette mit einer internen Einstellungsvorrichtung für die Zentrumsachse der Werkstücke zu entnehmen. Es ist nämlich erforderlich, die beiden äußeren Lünettenarme unterschiedlich zueinander zu bewegen, um die vertikale Ausrichtung des Werkstückes zu erreichen. Die horizontale Zentrierung des Werkstückes erfolgt gemeinsam mit allen drei Lünettenarmen, die sowohl gleichzeitig oder zeitlich versetzt zueinander in Wirkkontakt mit dem Werkstück gelangen.

Durch die EP 0 554 506 B1 wird zur vertikalen und horizontalen Ausrichtung der Lünettenarme eine äußerst konstruktiv aufwendige Verstelleinrichtung vorgeschlagen.

Für eine solche Verstelleinrichtung hat sich als nachteilig herausgestellt, dass diese zur Zentrierung des Werkstückes zu öffnen ist. Anschließend sind die Anschlagspunkte der drei Lünettenarme in Abhängigkeit von der notwendigen Positionsverschiebung des Werkstückes in Raum zu verändern.

Danach umgreifen die drei Lünettenarme das Werkstück erneut und halten dieses.

Dieser Stand der Technik hat sich zur Einstellung der Zustellbewegung der Lünettenarme zwar bewährt, jedoch sind die Lünettenarme zu öffnen, so dass die Einspannkräfte der Lünette nicht mehr auf das Werkstück einwirken, wodurch, insbesondere bei schweren Werkstücken, eine erhebliche Positionsverschiebung stattfindet.

Es ist daher Aufgabe der Erfindung, eine Lünette der eingangs genannten Gattung zur Verfügung zu stellen, durch die gewährleistet ist, dass hohe Bearbeitungskräfte zuverlässig abgestützt sind, ohne dass die zentrische Positionierung des Werkstückes im Raum durch diese Kräfte verändert ist und dass gleichzeitig die Zentrierung des Werkstückes im Raum auf einfache und schnelle Art durch die Lageveränderung der Lünettenarme einstellbar ist, ohne dass hierfür die Kontaktwirkung der drei Lünettenarme von dem Werkstück zu lösen sind, dass also im eingespanntem Zustand des Werkstückes dessen räumliche Position bedarfsweise einstellbar ist.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in die Betätigungsstange eine Durchgangsöffnung eingearbeitet ist, kann in diese ein Kraftübertragungselement eingesetzt sein, um eine Relativbewegung zwischen zwei Verstelleinrichtungen zu ermöglichen, durch die entweder die drei Lünettenarme gemeinsam zur horizontalen Verschiebung des Werkstückes und/oder durch die die Steuerflächen des Führungsschlittens in vertikaler Richtung synchron zueinander verstellbar sind, um hierdurch eine vertikale Ausrichtung des Werkstückes zu erreichen. Folglich ist das Werkstück im eingespannten Zustand sowohl in horizontaler als auch in vertikaler Richtung zentrierbar; der Einspannzustand des Werkstückes kann demnach beibehalten sein.

Die Verwendung von zwei Verstelleinrichtungen stellt eine besonders vorteilhafte Ausgestaltung dar, denn dadurch ist das Werkstück in zwei senkrecht zueinander verlaufenden Ebenen ausrichtbar. Es kann jedoch auch lediglich eine der beiden Verstelleinrichtungen in einer Lünette verbunden sein.

Es ist besonders zweckmäßig, die Verstelleinrichtungen räumlich getrennt voneinander in dem Gehäusedeckel bzw. in der Gehäuseschale anzuordnen, um voneinander unabhängige Relativbewegungen der drei Lünettenarme bzw. des Führungsschlittens in vertikaler Richtung zur Veränderung der räumlichen Position der beiden äußeren Lünettenarmen vorzusehen, denn dadurch können gleichzeitig oder getrennt das gespannte Werkstück in horizontaler und / oder vertikaler Richtung zentriert werden.

Eine solche Relativbewegung ist dadurch erreicht, dass das Kraftübertragungselement aus zwei nierenörmigen fest miteinander verbundenen Anformungen besteht, die gegenüberliegend und kreuzweise zueinander verlaufen und der Gehäuseschale bzw. dem Gehäusedeckel zugewandt sind, so dass die Verstelleinrichtungen über Zwischenglieder in trieblicher Wirkverbindung mit dem Kraftübertragungselement stehen, wodurch die geringfügigen Bewegungen der Verstelleinrichtungen auf das Kraftübertragungselement übertragbar sind und von diesem entweder an die drei Lünettenarme zur gemeinsamen horizontalen Verstellung oder an den Führungsschlitten zur vertikalen Ausrichtung der äußeren Lünettenarme weitergeleitet ist, so dass die jeweiligen Kraftanteile der Verstelleinrichtungen voneinander entkoppelt sind.

In der Zeichnung ist ein erfindungsgemäßes Ausführungsbeispiel einer Lünette dargestellt, das nachfolgend näher erläutert ist. Im Einzelnen zeigt:
- Figur 1: eine Lünette mit einer Gehäuseschale und einem fest mit diesem verbundenen Gehäusedeckel, durch die ein Innenraum gebildet ist, in dem eine Betätigungsstange, die mit drei Lünettenarmen in trieblicher Wirkverbindung steht, axial verschiebbar angeordnet ist, um ein Werkstück zentriert im Raum zu halten, in Explosverstellung mit dem Gehäusedeckel im Vordergrund,
- Figur 2: die Lünette gem. Figur 1 in Explosverstellung mit der Gehäuseschale im Vordergrund,
- Figur 3a: einen vergrößerten Teilausschnitt der Lünette gemäß Figur 1,
- Figur 3b: die Betätigungsstange und den mittleren Lünettenarm der Lünette gem. Figur 1, in vergrößerter Explosverstellung,
- Figur 4: einen vergrößerten Teilausschnitt der Lünette gemäß Figur 2,
- Figur 5a: einen weiter vergrößerten Teilausschnitt der Lünette gemäß Figur 4,
- Figur 5b: einen vergrößerten Teilauschnitt der Lünette gemäß Figur 2,
- Figur 6a: einen vergrößerten Teilauschnitt der Lünette gemäß Figur 1,
- Figur 6b: einen vergrößerten Teilauschnitt der Lünette gemäß Figur 2,
- Figur 7: die Lünette gemäß Figur 1 im zusammengebauten Zustand, in Seitenansicht,
- Figur 8: die Lünette gemäß Figur 7 entlang der Schnittlinie VIII,
- Figur 9: die Lünette gemäß Figur 7 entlang der Schnittline VIIII,
- Figur 10: die Lünette gemäß Figur 7 in einer horizontalen Mittelstellung,
- Figur 11: die Lünette gemäß Figur 10 entlang der Schnittlinie XI-XI und
- Figur 12: die Lünette gemäß Figur 10 entlang der Schnittline XII-XII.

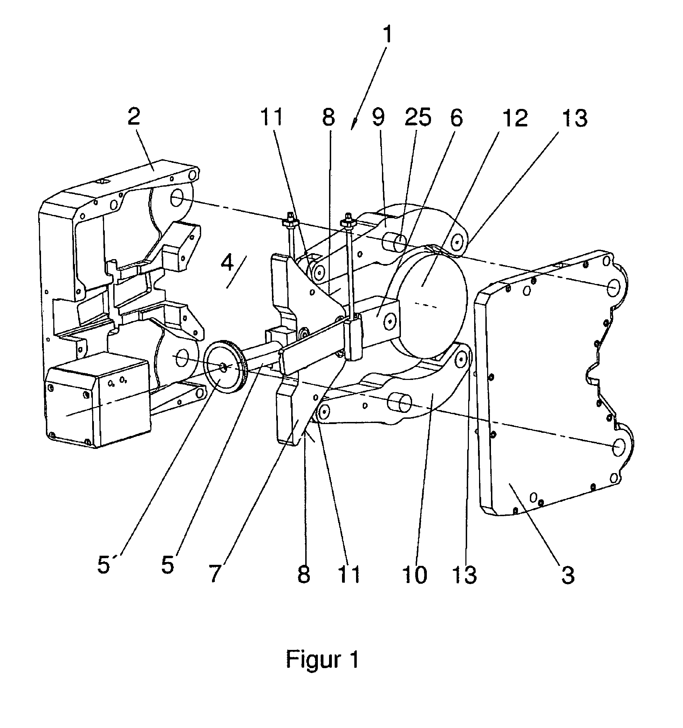

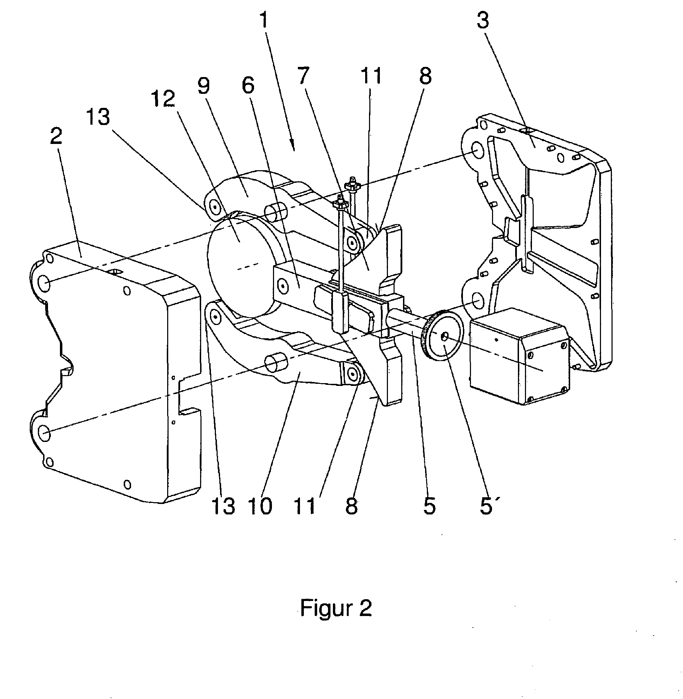

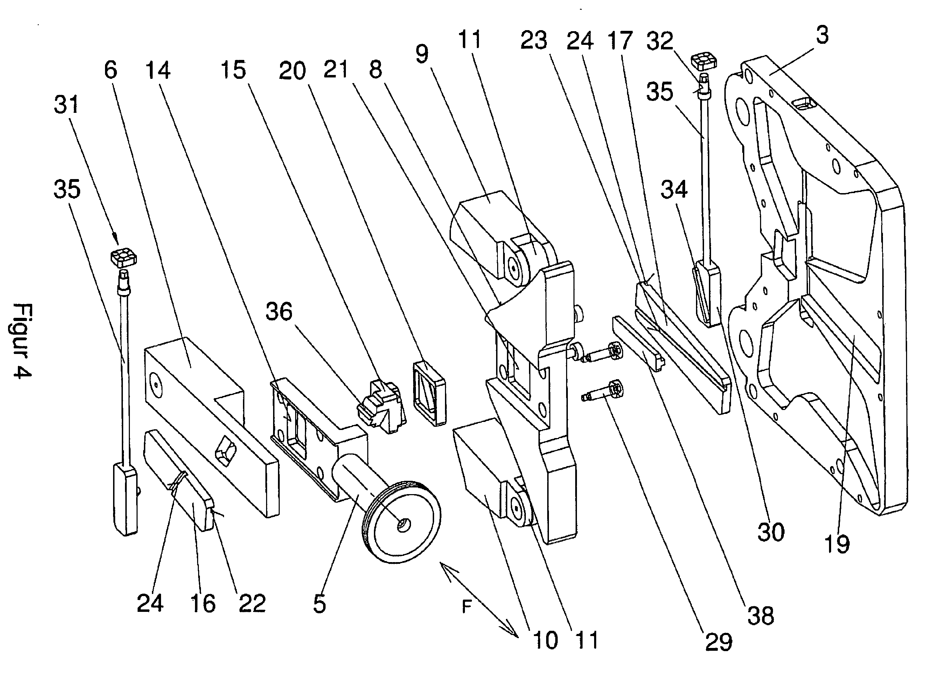

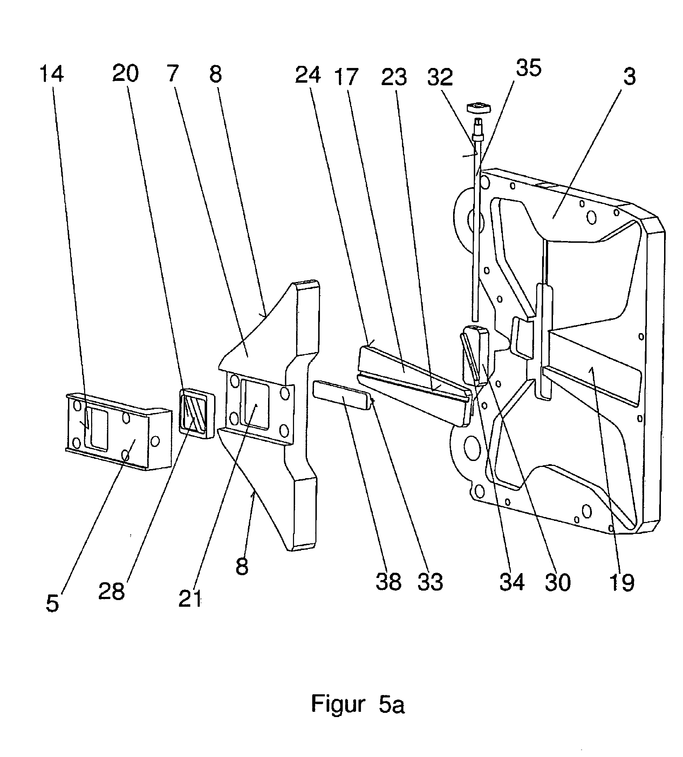

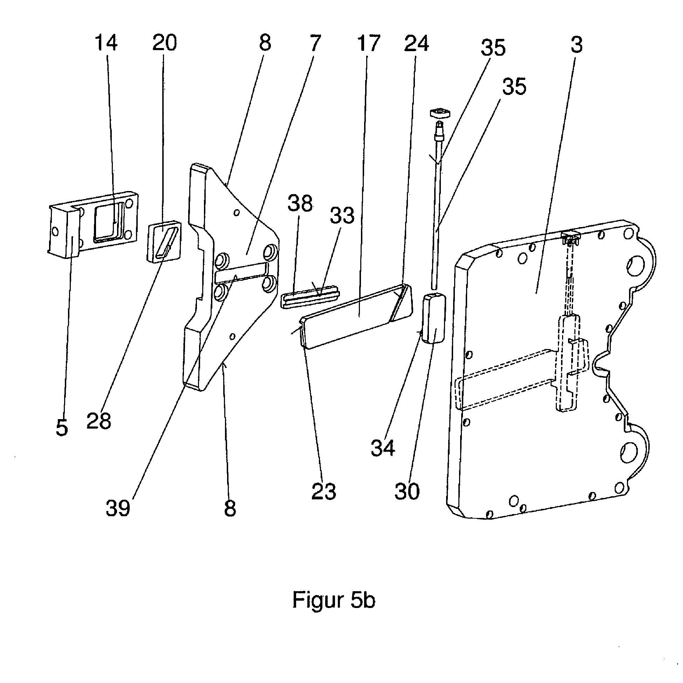

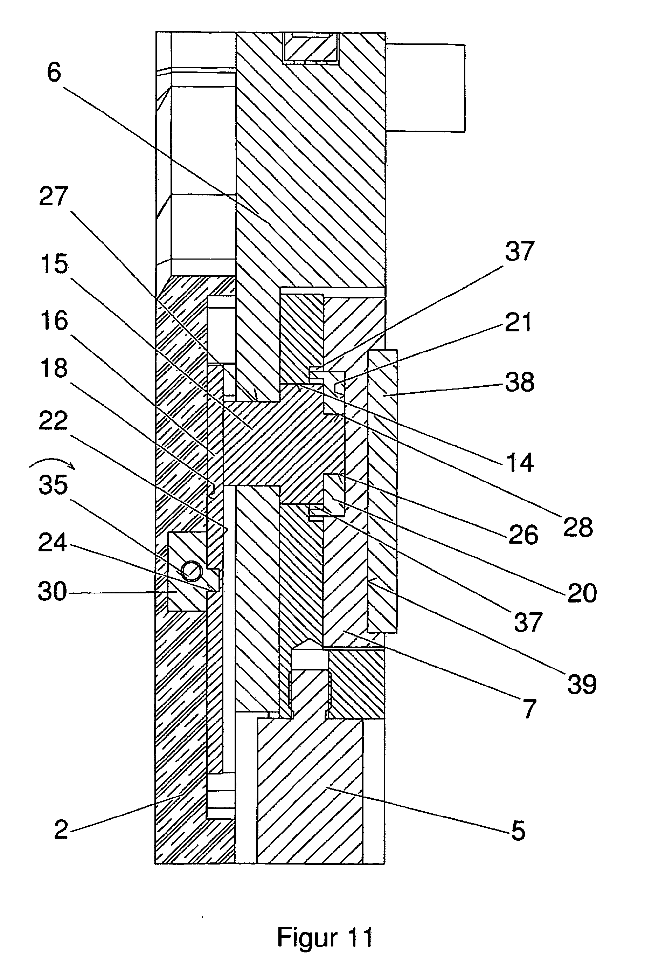

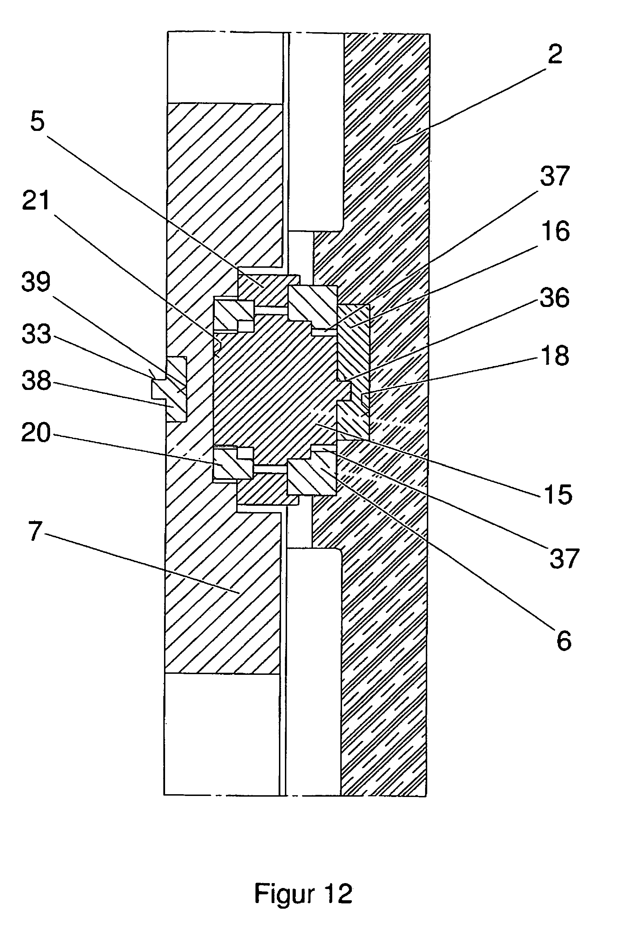

In den Figuren 1 bis 12 ist eine Lünette 1 zur räumlichen Zentrierung eines Werkstückes 12 mittels dreier Lünettenarme 6, 9 und 10 abgebildet. Dabei soll die räumliche Position des Werkstückes 12 durch eine vertikale und/oder horizontale Verschiebung der Lünettenarme 6, 9 und 10 im eingespannten Zustand des Werkstückes 12, also wenn die Lünettenarme 6, 9 und 10 an der Außenmantelfläche des Werkstückes 12 fest anliegen und dieses im Raum fixieren, möglich sein. Zunächst wird der konstruktive Aufbau der Lünette 1 und anschließend die Einstellmöglichkeiten und die sich daraus ergebende Funktionsweise der Lünette 1 erläutert.

Aus den Figuren 1, 2 und 3a ist ersichtlich, dass die Lünette 1 aus einer Gehäuseschale 2 und einem Gehäusedeckel 3 besteht, die im montierten Zustand miteinander verbunden sind und durch die ein Innenraum 4 gebildet ist. In dem Innenraum 4 ist eine Betätigungsstange 5 angeordnet, die mit einem Druckkolben 5' in Wirkverbindung steht und durch diese in der Gehäuseschale 2 und dem Gehäusedeckel 3 axial verschiebbar hin und her bewegbar ist. An der Betätigungsstange 5 ist der mittlere Lünettenarm 6 -wie dies nachfolgend noch näher erläutert ist- über Zwischenglieder trieblich verbunden.

Des Weiteren ist an der Betätigungsstange 5 ein Führungsschlitten 7 in noch näher zu erläuternder Weise angebracht. Der Führungsschlitten 7 weist eine im Wesentlichen dreieckförmige Querschnittskontur auf. Eine der drei Dreiecksspitzen ist dabei dem einzuspannenden Werkstück 12 zugewandt und die beiden anderen auf einer gemeinsamen Achse liegenden Dreiecksspitzen sind der Betätigungsstange 5 zugewandt, so dass die von den beiden Dreiecksspitzen gebildete Achse senkrecht zu der Betätigungsstange 5 verläuft. Die beiden seitlichen Stirnflächen des Führungsschlittens 7 sind mit einer Kontur versehen, die als Steuerfläche 8 für die beiden äußeren Lünettenarme 9 und 10 dient, denn deren dem Führungsschlitten 7 zugewandten freien Enden 11 liegen spielfrei auf der jeweiligen Steuerfläche 8 des Führungsschlittens 7 auf.

Darüber hinaus sind die beiden äußeren Lünettenarme 9 und 10 mittels eines Gelenkbolzens 25 an der Gehäuseschale 2 und dem Gehäusedeckel 3 verschwenkbar gelagert, so dass beim axialen Verschieben der Betätigungsstange 5 sowohl der mittlere Lünettenarm 6 als auch die beiden äußeren Lünettenarme 9 und 10 synchron auf das Werksstück 12 zubewegt werden und üblicherweise gleichzeitig in Wirkkontakt mit der Außenmantelfläche des Werkstücks 12 gelangen. Je weiter die Betätigungsstange 5 zugestellt wird, desto größer ist die Einspannkraft, die von den drei Lünettenarmen 6, 9 und 10 auf das Werkstück 12 ausgeübt ist.

Da die beiden äußeren Lünettenarme 9 und 10 mittels des Gelenkbolzens 25 verschwenkbar gelagert sind und der Führungsschlitten 7 genauso wie der mittlere Lünettenarm 6 linear in Richtung des Werkstückes 12 zugestellt ist, schwenken die beiden äußeren Lünettenarme 9 und 10 um den Gelenkbolzen 25 in Richtung auf das Werkstück 12. Die Konturen der beiden Steuerflächen 8 an dem Führungsschlitten 7 sind dabei derart auszugestalten, dass die Verschwenkbewegungen der beiden äußeren Lünettenarme 9 und 10 sowohl synchron zueinander als auch synchron zu dem mittleren Lünettenarmen 6 stattfindet; der zurückgelegte Weg des mittleren Lünettenarmes 6 und der beiden freien dem Werkstück 12 zugewandten Enden 13 der äußeren Lünettenarme 9 und 10 ist unterschiedlich, so dass die linearen Zustellgeschwindigkeit des mittleren Lünettenarmes 6 und des Führungsschlittens 7 identisch sind, die Zustellgeschwindigkeit der äußeren Lünettenarme 9 und 10 jedoch aufgrund der Steuerfläche 8 größer bemessen ist, wenn der Zustellweg der äußeren Lünettenarme 9 und 10 größer als der Zustellweg des mittleren Lünettenarmes 6 ist. Der entsprechende physikalische mathematische Ausgleich der Verstellbewegungen aufgrund der Verschwenkung der beiden äußeren Lünettenarme 9 und 10 wird demnach durch die Kontur der Steuerfläche 8 erreicht.

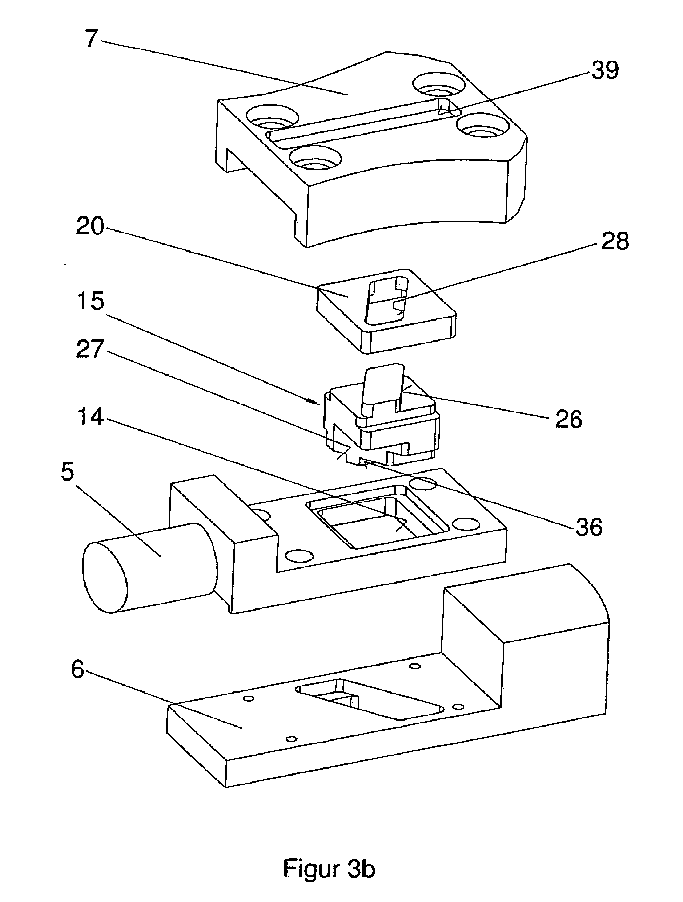

Insbesondere Figur 3b ist zu entnehmen, dass in die Betätigungsstange 5 eine Durchgangsöffnung 14 eingearbeitet ist, die eine rechteckförmige Innenkontur aufweist. In die Durchgangsöffnung 14 ist ein Kraftübertragungselement 15 eingesetzt, durch das zwei senkrecht zueinander verlaufende Einstellkräfte übertragen werden, ohne dass dabei die Anteile der beiden unterschiedlichen Einstellkräfte einen wechselnden oder gegenseitig störenden Einfluss aufeinander ausüben. Vielmehr sollen die von einer ersten und zweiten Verstelleinrichtung 31 und 32 ausgeübten Einstellkräfte, die im eingespannten Zustand des Werkstückes 12 dessen räumliche Position in der vertikalen bzw. horizontalen Ebene beeinflussen, getrennt voneinander auf das Werkstück 12 einwirken können, um eine räumliche Zentrierung des Werkstückes 12 zu erreichen.

Die von dem Druckkolben auf die Betätigungsstange 5 ausgeübte Einspannkraft wirkt sowohl auf den mittleren Lünettenarm 6 als auch auf den Führungsschlitten 7 und folglich auf die beiden äußeren Lünettenarme 9, 10 konstant ein.

Das Kraftübertragungselement 15 ist als Quader ausgestaltet, an dem an zwei gegenüberliegenden Stirnflächen jeweils eine nierenförmige Anformung 26 bzw. 27 angeformt ist, die kreuzweise zueinander und in der jeweiligen Diagonalen der Stirnfläche verlaufen. Die erste nierenförmige Anformung 26 des Kraftübertragungselementes 15 ist dabei dem Führungsschlitten 7 und die zweite nierenförmige Anformung 27 ist der Gehäuseschale 2 zugewandt.

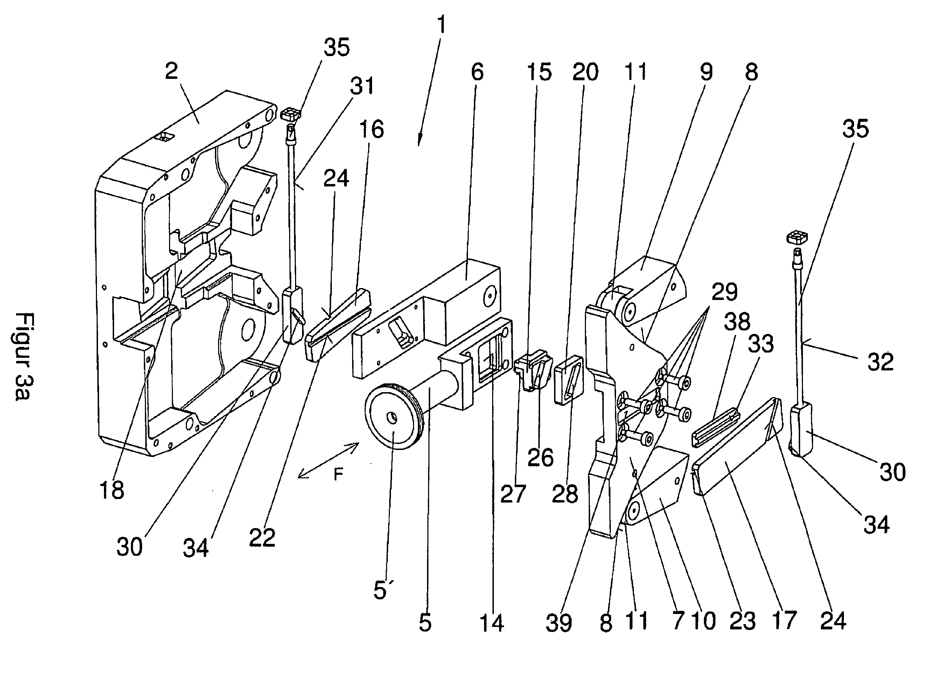

Gemäß Figur 3a ist auf der ersten nierenförmigen Anformung 26 eine Zustellplatte 20 aufgesetzt, in die eine Nut 28 eingearbeitet ist, deren Ausrichtung an den Verlauf der ersten Anformung 26 des Kraftübertragungselementes 15 angepasst ist. Allerdings ist die Länge der Nut 28 größer bemessen als die Längsausdehnung der Anformung 26, so dass die Zustellplatte 20 in Längsrichtung der Nut 28 relativ zu dem Kraftübertragungselement 15 bewegbar ist. Die parallel zu der Längsachse der Nut 28 verlaufenden Seitenwände der Nut 28 liegen dagegen spielfrei an den Flanken der Anformung 26 an.

Die Zustellplatte 20 ist in eine Aussparung 21, die in den Führungsschlitten 7 eingearbeitet ist, spielfrei eingesetzt. Der Führungsschlitten 7 ist mittels Befestigungsschrauben 29 an der Betätigungsstange 5 gehalten.

In den Figuren 3b, 4 und 5a ist nunmehr gezeigt, auf welche konstruktive Weise der Führungsschlitten 7 mit der zweiten vertikalen Verstelleinrichtung 32 zusammenwirkt, denn in dem Führungsschlitten 7 ist eine Führungsnut 39 eingearbeitet, in die eine Führungsplatte 38 axial verschiebbar und in vertikaler Richtung spielfrei eingesetzt ist. Dem Führungsschlitten 7 abgewandt ist an der Führungsplatte 38 eine Schiene 33 angeformt, die parallel zu der Horizontalen verläuft, und zwar bezogen auf die Längsachse des Führungsschlittens 7. Die Schiene 33 ist in einer Führungsleiste 17 eingearbeiteten Führungsnut 23 axial verschiebbar und in vertikaler Richtung spielfrei gelagert. Die Führungsleiste 17 ist unter einem Winkel von ca. 5 ° in einer in dem Gehäusedeckel 3 eingearbeiteten Führungsnut 19 axial verschiebbar eingebaut. Die in der Führungsleiste 17 vorgesehene Führungsnut 23 verläuft unter einem Winkel von 5°, und zwar kreuzweise bzw. gegenläufig geneigt zu der Neigungsstellung der Führungsnut 19, so dass im eingebauten Zustand die Schiene 33 parallel zur Längsachse bewegt ist und spielfrei mit der Führungsleiste 17 im Eingriff steht. Auf der der Führungsleiste 17 abgewandten Seite der Führungsplatte 38 ist eine aus der Vertikalen geneigten Einkerbung 24 vorgesehen, die in einem Winkel von etwa 20° bezogen auf die Vertikale und in Richtung des Werkstücks 12 geneigt verläuft.

In die Einkerbung 24 in dem Gehäusedeckel 3 ist eine Versteilplatte 30 mit einer nierenförmigen Anformung 34 eingesetzt, die mittels einer Betätigungsstange 35 in vertikaler Richtung in dem Gehäusedeckel 3 bewegbar ist, da die Betätigungsstange 35 von außen zugänglich ist.

Wird demnach die Betätigungsstange 35 in vertikaler Richtung bewegt, dann erzeugt die Schrägverzahnung zwischen der Anformung 34 der Verstellplatte 30 und der Führungsleiste 17 eine Verschiebung in der vertikalen Ebene, wodurch die Führungsplatte 38 aufgrund der geneigten Anordnung der Schiene 33 axial verschoben und gleichzeitig bezogen auf die horizontale Ebene angehoben bzw. abgesenkt wird, wodurch sich der Führungsschlitten 7 nach oben oder unten, also in vertikaler Richtung, bewegt. Die Bewegung des Führungsschlittens 7 in vertikaler Richtung bewirkt, dass die beiden äußeren Lünettenarme 9 und 10, und zwar synchron zueinander, diese Bewegung des Führungsschlittens 7 nachempfinden und somit die räumliche Position des Werkstückes 12 in der vertikalen Ebene in Abhängigkeit von der Bewegungsrichtung der Betätigungsstange 35 veränderbar ist. Gleichzeitig rutscht die Zustellplatte 20 auf der Anformung 26 entlang, so dass die vertikale Positionsveränderung nicht auf das Kraftübertragungselement 15 und die Betätigungsstange 5 weitergeleitet ist.

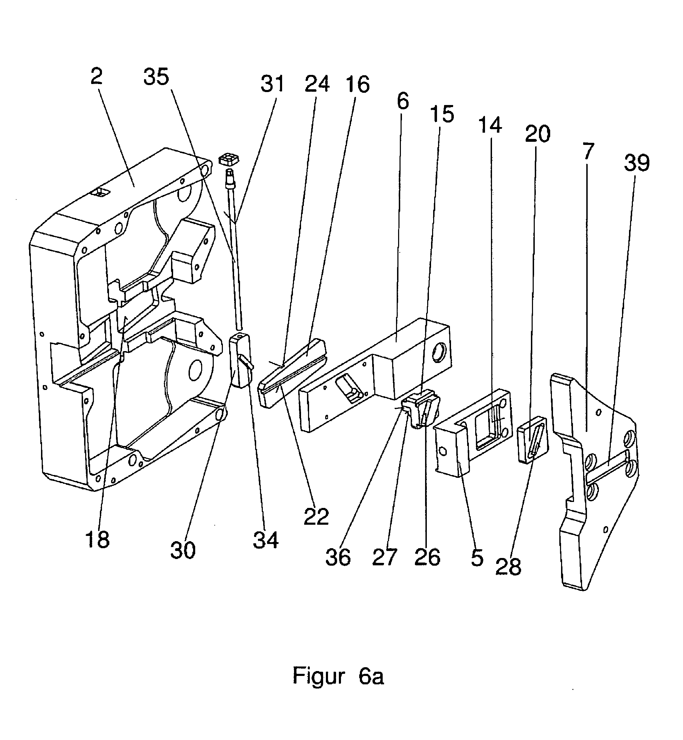

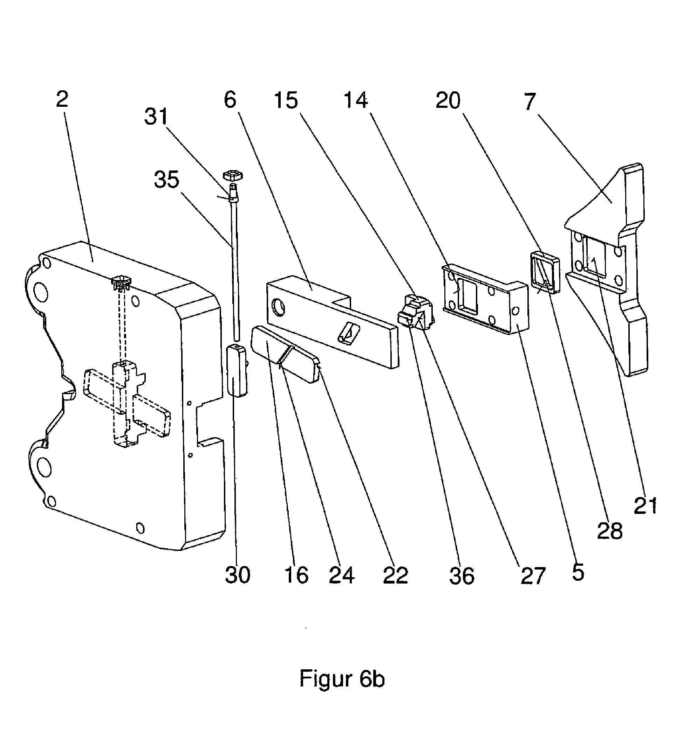

In Figur 6a ist der konstruktive Aufbau der ersten Verstelleinrichtung 31 zur horizontalen Verschiebung des Werkstückes 12 zu entnehmen. An dem Kraftübertragungselement 15 ist an der nierenförmigen Anformung 27 auch eine in der horizontalen Ebene verlaufende Schiene 36 vorgesehen, deren räumliche Ausdehnung derart bemessen ist, dass die Schiene 36, die von der Betätigungsstange 5 gebildeten Ebene durchgreift und von dieser in Richtung einer weiteren Führungsleiste 16 über steht. In die Führungsleiste 16, die zu der Gehäuseschale 2 benachbart ist, ist eine Führungsnut 22 eingearbeitet, die aus der Horizontalen um etwa 5° geneigt ist. Im eingebauten Zustand bewegt sich die Führungsleiste 16 unter einem Winkel von ca. 5° bezogen auf die Längsachse und steht im spielfreien Eingriff mit einer Verstellplatte 30, denn die Führungsleiste 16 ist unter einem Winkel von ca. 5° in einer in der Gehäuseschale 2 eingearbeiteten Führungsnut 18 axial verschiebbar eingebaut. Die Führungsnut 22 verläuft unter einem Winkel von ca. 5° bezogen auf die Längsachse, und zwar kreuzweise bzw. gegenläufig geneigt zu der Anordnung der Führungsleiste 16 bzw. der Führungsnut 18 in der Gehäuseschale 2, so dass gemäß Figur 6a die Bewegung der Führungsnut 22 parallel zur Längsachse erfolgt. Auf der der Führungsnut 22 zugewandten Stirnfläche der Führungsleiste 16 ist in diese eine Einkerbung 24 vorgesehen, in die die Verstellplatte 30 mit einer Anformung 34 eingesetzt ist.

Die Anformung 34 ist um etwa 20° aus der Vertikalen geneigt, und zwar dem Werkstück 12 abgewandt. Die Verstellplatte 30 kann über eine Betätigungsstange 35, die in der Gehäuseschale 2 axial verschiebbar angeordnet ist, in der entsprechenden Höhenlage verändert werden, so dass über die Schrägverzahnung zwischen der Anformung 34 und der Einkerbung 24 eine axiale Bewegung der Führungsleiste 16 in Längsrichtung der Betätigungsstange 5 erfolgt.

Aufgrund der geneigten Ausrichtung der Führungsnut 22 in der Führungsleiste 16 wird die Höhe des Kraftbetätigungselementes 15 über die formflüssige Wirkverbindung zwischen der diesem angeformten Schiene 36 verändert, so dass das Kraftübertragungselement 15 angehoben oder abgesenkt ist, wodurch über die Anformung 27 sowohl der Anschlagszeitpunkt des mittleren Lünettenarmes 6, als auch die mit diesem gekoppelte axiale Zustellbewegung des Führungsschlittens 7 eingestellt ist, da die Positionen des mittleren Lünettenarmes 6 und des Führungsschlittens 7 in horizontaler Richtung geringfügig veränderbar sind. Dies führt im eingespannten Zustand des Werkstückes 12 dazu, dass der mittlere Lünettenarm 6 beispielsweise von dem Werkstück 12 geringfügig wegbewegt wird und gleichzeitig die beiden äußeren Lünettenarme 9 und 10 das Werkstück 12 an einem weiter entfernt liegenden Anschlagpunkt, bezogen auf den mittleren Lünettenarm 6 umgreifen und wenn der mittlere Lünettenarm 6 in Richtung auf das Werkstück 12 zubewegt wird, erfolgt gleichzeitig eine Veränderung der Anschlagpunkte der beiden äußeren Lünettenarme 9 und 10 an dem Werkstück 12 in Richtung des mittleren Lünettenarmes 6, da der Führungsschlitten 7 jeweils synchron mit der Positionsverschiebung des mittleren Lünettenarmes 6 gekoppelt ist, wodurch sich die Zustellwinkel der beiden äußeren Lünettenarme 9 und 10 entsprechend der Bewegung des Fühungsschlittens 7 anpassen und verändern.

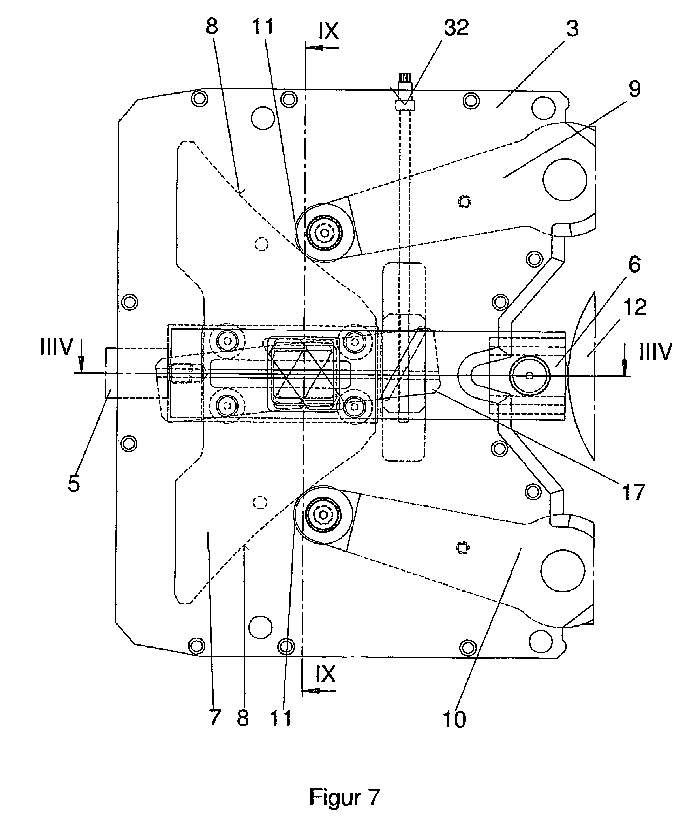

In den Figuren 7, 8 und 9 ist die Lünette 1 im zusammengebauten Zustand und in der vertikalen Mittelstellung gezeigt. Zwischen dem Kraftübertragungselement 15, insbesondere zwischen der Anformung 26 und der Zustellplatte 20 ist ein Luftspalt 37 vorgesehen, durch den die Außenkontur des Kraftübertragungselementes 15 von der Innenkontur der Übertragunsplatte 20 beabstandet ist, so dass das Kraftübertragungselement in Richtung des Luftspaltes 37 hin und her bewegbar ist.

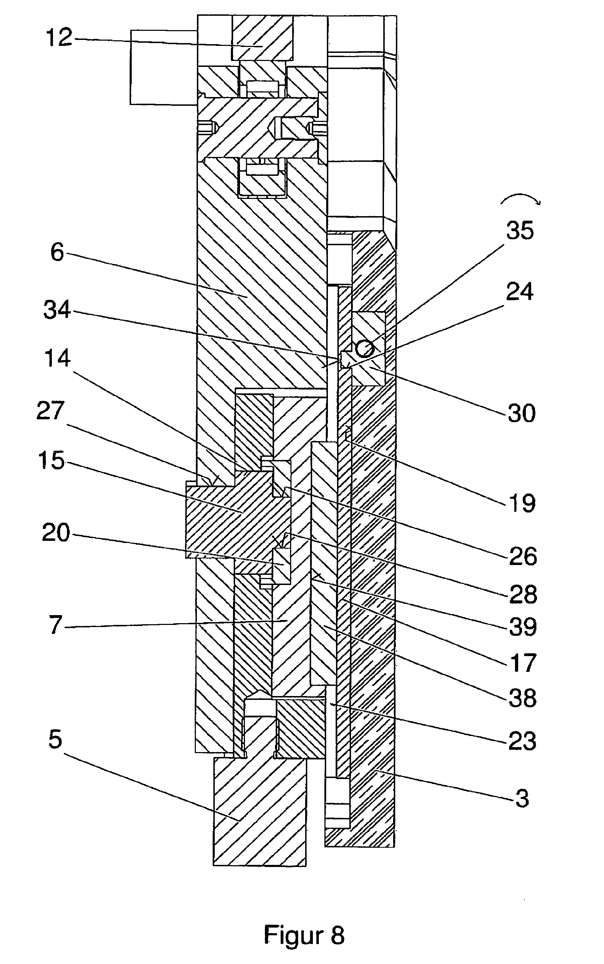

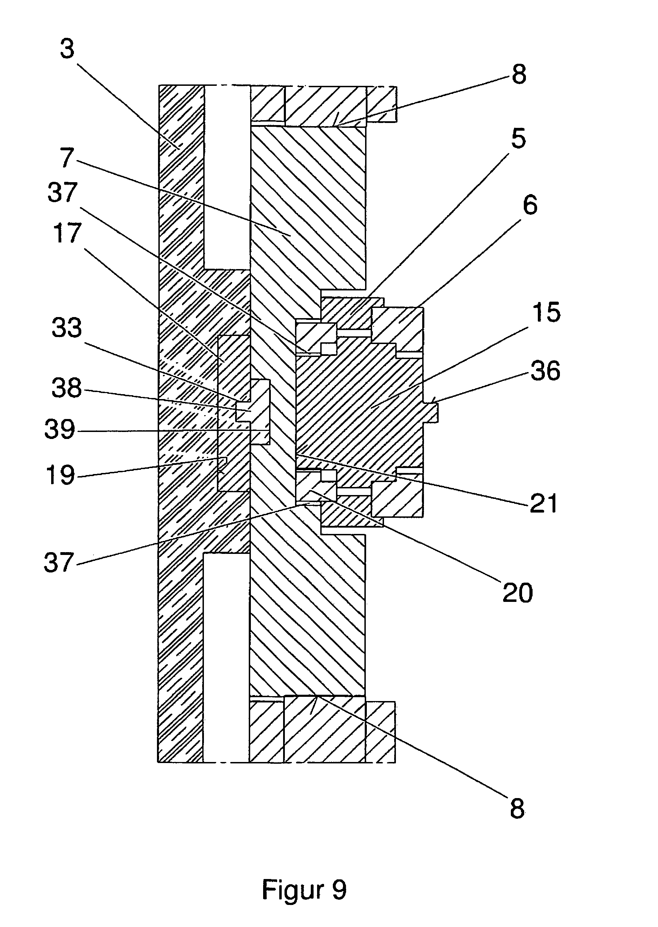

Ausgehend von der Betätigungsstange 35 ist insbesondere den Figuren 8 und 9 zu entnehmen, dass die Verstellplatte 30 mit der Führungsleiste 17 in formschlüssiger Wirkverbindung steht, so dass diese aufgrund der Schrägverzahnung zwischen der Verstellplatte 30 und der Führungsleiste 17 eine axiale Verschiebung erfährt und aufgrund des geneigten Verlaufes der Führungsnut 23 der Führungsschlitten 7 in vertikaler Richtung angehoben oder abgesenkt ist. Diese Bewegung des Führungsschlittens 7 wird auf das Kraftübertragungselement 15 aufgrund des vorhandenen Luftspaltes 37 nicht weitergeleitet, so dass die vertikale Ausrichtung des Führungsschlittens 7 keine Positionsveränderung des Kraftübertragungselementes 15 nach sich zieht.

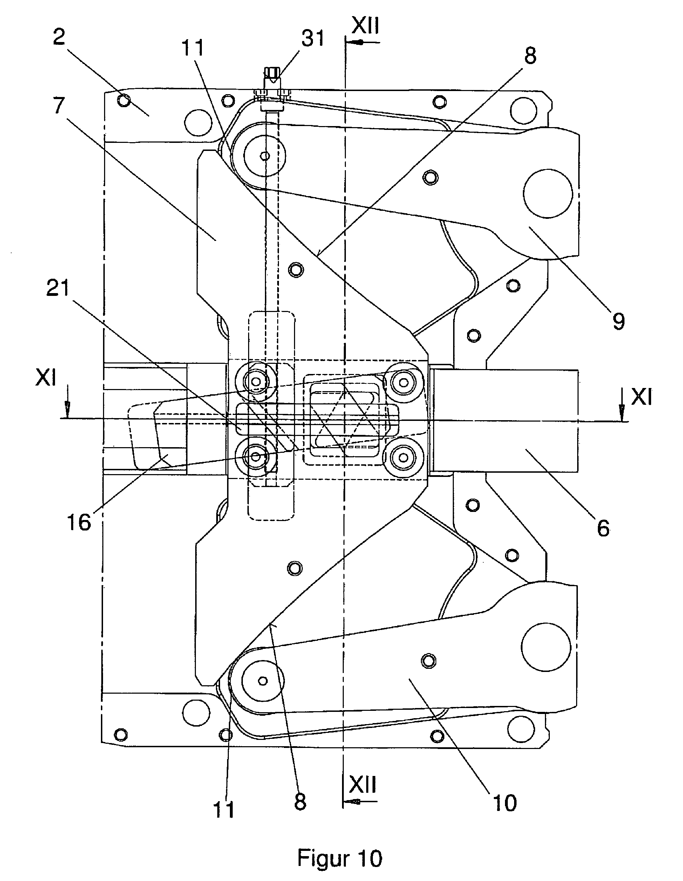

In den Figuren 10, 11 und 12 ist die horizontale Einstellung der drei Lünettenarme 6, 9 und 10 ersichtlich. Ausgehend von der horizontalen Verstelleinrichtung 31 und deren Betätigungsstange 35 wird erneut die Verstellplatte 30 in vertikaler Richtung angehoben oder abgesenkt, so dass aufgrund der formschlüssigen Wirkverbindung in Form der Verzahnung zwischen der Verstellplatte 30 und der Führungsleiste 16 eine axiale Verschiebung der Führungsleiste 16 erfolgt. Durch die geneigte Ausrichtung der Führungsnut 22 und der formschlüssigen Verbindung zwischen der Schiene 36 und der nierenförmigen Anformung 27 wird diese Verstellung der Führungsleiste 16 an das Kraftübertragungselement 15 übertragen. Diese Positionsveränderung des Kraftsübertragungselementes 15 führt dazu, dass der mittlere Lünettenarm 6 und über die Verbindung zwischen dem Kraftübertragungselement 15 und der Übertragungsplatte 20 der Führungsschlitten 7 in der horizontalen Ebene in Richtung des Werkstückes 12 zubewegt oder von diesem wegbewegt sind. Dieser geringfügige Verschiebeweg führt dann dazu, dass die Anlagepositionen der drei Lünettenarme 6, 9 und 10 synchron, während diese in Wirkkontakt mit dem Werkstück 12 stehen, verändert sind. Eine gleichzeitige Verschiebung der drei Lünettenarme 6, 9 und 10 verschiebt ausschließlich die räumliche Position des Werkstückes 12. Eine Auflösung des Spannzustandes erfolgt nicht und ist auch nicht notwendig.

## Patentansprüche

1. Lünette (1) zur Zentrierung eines rotationssysmmetrischen Werkstückes (12) im Raum, bestehend aus einer Gehäuseschale (2) und einem Gehäusedeckel (3), die fest miteinander verbunden sind und die einen Innenraum (4) bilden,
- aus einem in dem Innenraum (4) axial verschiebbar gelagerten Führungsschlitten (7) und einer Betätigungsstange (5), die mit dem Führungsschlitten (7) formschlüssig verbunden ist.
- aus zwei an dem Führungsschlitten (7) gegenüberliegend zueinander angeformten Steuerflächen (8), die derart ausgestaltet sind, dass der Führungsschlitten (7) im Wesentlichen eine dreieckförmige Querschnittskontur aufweist, deren eine Dreiecksspitze dem Werkstück (12) und deren gegenüberliegenden beiden Dreiecksspitzen der Betätigungsstange (5) zugewandt sind,
- aus einem mittleren Lünettenarm (6), der trieblich mit der Betätigungsstange (5) gekoppelt ist und
- aus zwei jeweils seitlich neben dem mittleren Lünettenarm (6) angeordneten äußeren Lünettenarme (9,10), die in der Gehäuseschale (2) und/oder dem Gehäusedeckel (3) verschwenkbar gelagert sind und deren jeweiliges erstes freies Ende (11) an der Steuerfläche (8) des Führungsschlittens (7) aufliegt und deren gegenüberliegendes zweites freies Ende (13) an dem einzuspannenden Werkstück (12) fest anliegen und die gemeinsam mit dem mittleren Lünettenarm (6) eine Dreipunktlagerung zur Halterung des Werkstückes (12) bilden,
**dadurch gekennzeichnet,**
**dass** in die Betätigungsstange (5) eine Durchgangsöffnung (14) eingearbeitet ist, in die ein Kraftübertragungselement (15) eingesetzt ist, dass das Kraftübertragungselement (15) mit einer ersten Verstelleinrichtung (31) über Zwischenglied (16, 20) mit der Steuerkurve (8) des Führungsschlittens (7) in formschlüssiger Wirkverbindung steht, dass im eingespannten Zustand des Werkstückes (12) durch die erste Verstelleinrichtung (31) die zwei äußeren Lünettenarme (9, 10) über die Steuerkurve (8) in einer Schwenkbewegung um den Lagerbolzen (25) und der mittlere Lünettenarm (6) über das Kraftübertragungselement (15) gemeinsam und synchron zueinander in ihrer jeweiligen Position zur Ausrichtung des Werkstückes (12) im eingespannten Zustand in Richtung des mittleren Lünettenarmes (6) bewegbar sind, und/oder dass eine zweite Verstelleinrichtung (32) über Zwischenglieder (17, 38) mit dem Kraftübertragungselement (15) rutschend verbunden ist, und dass durch die Bewegung der Zwischenglieder (17, 38) die Steuerkurve (8) senkrecht zu dem mittleren Lünettenarm (6) zur Positionierung der beiden äußeren Lünettenarme (9, 10) und zur Veränderung der Position des Werkstückes (12) im eingespannten Zustand senkrecht zu dem mittleren Lünettenarm (6) und in der von beiden äußeren Lünettenarmen (9, 10) gebildeten Ebene bewegbar sind.

2. Lünette nach Anspruch 1,
**dadurch gekennzeichnet,**
**dass** an dem Kraftübertragungselement (15) zwei nierenförmige Anformungen (26, 27) vorgesehen sind, die gegenüberliegend und kreuzweise zueinander verlaufen und der Gehäuseschale (2) bzw. dem Gehäusedeckel (3) zugewandt sind.

3. Lünette nach Anspruch 1 oder 2,
**dadurch gekennzeichnet,**
**dass** durch das Kraftübertragungselement (15) eine Entkopplung der Einstellkräfte, die durch die beiden Verstelleinrichtungen (31 und/oder 32) entstehen, derart erreicht ist, dass der horizontal wirkende Kraftanteil der ersten Verstelleinrichtung (31) und der vertikale Kraftanteil der zweiten Verstelleinrichtung (32) wechselweise oder gemeinsam auf das Kraftübertragungselement (15) einwirken und dass durch das Kraftübertragungselement (15) eine RelativBewegung zwischen der ersten und der zweiten Verstelleinrichtung (31, 32) bzw. deren jeweiligen Zwischengliedern (16, 17, 20, 30, 35) vorhanden ist.

4. Lünette nach einem der vorgenannten Ansprüche,
**dadurch gekennzeichnet,**
**dass** die horizontale Verstelleinrichtung (31) aus einem in der Gehäuseschale (2) senkrecht zu der Bewegungsrichtung der Betätigungsstange (5) angeordneten und in dieser verschiebbar gelagerten Betätigungsstange (35) besteht, an deren freien dem Innenraum (4) zugewandten Ende eine Verstellplatte (30) angeformt ist, dass an der Verstellplatte (30) eine aus der Horizontalen geneigte und von dem Werkstück (12) abgewandte nierenförmige Anformung (34) angearbeitet ist, dass in der Gehäuseschale (2) eine unter einem Winkel aus der Horizontalen geneigte Führungsnut (18) eingearbeitet ist, in die eine Führungsleiste (16) axial verschiebbar eingesetzt ist, in die eine aus der Horizontalen geneigte und an die Anformung (34) angepasste Führungsnut (22) eingearbeitet ist, die mit der Verstellplatte (30) formschlüssig verbunden ist und die kreuzweise oder gegenläufig geneigt zu der Führungsnut (18) verläuft, dass die Führungsleiste (16) mit dem mittleren Lünettenarm (6) im montierten Zustand fest verbunden ist und dass an dem Kraftübertragungselement (15) eine Schiene (36) angeformt ist, die in der Führungsnut (22) axial verschiebbar parallel zu der Längsachse gelagert ist.

5. Lünette nach einem der vorgenannten Ansprüche,
**dadurch gekennzeichnet,**
**dass** das Kraftübertragungselement (15) zur vertikalen Verstellung des Werkstückes (12) auf der zu der Betätigungsstange (5) gegenüberliegenden Seite eine nierenförmige Anformung (26) aufweist, die in eine Zustellplatte (20), in der eine mit der Anformung (26) korrespondierende Aufnahmenut (28) eingearbeitet ist, eingesetzt ist, dass die Zustellplatte (20) in eine in den Führungsschlitten (7) eingearbeitete Aussparung (21) eingesetzt ist, dass die Anformung (27) des Kraftübertragungselementes (15) aus der von dem Führungsschlitten (7) und der Übertragungsplatte (20) gebildeten Ebene übersteht und in einer Führungsleiste (17), in der eine aus der Horizontalen geneigte Führungsnut (23) eingearbeitet ist, formschlüssig eingesetzt ist, dass die Führungsleiste (17) in einer in dem Gehäusedeckel (3) eingearbeiteten Führungsnut (19) unter einem Neigungswinkel, der gegenläufig geneigt oder kreuzweise zu der Führungsnut (19) verläuft, axial verschiebbar gelagert ist, und dass die Führungsleiste (17) eine schräg verlaufende Verstellnut (24) aufweist, in die eine an dem Gehäusedeckel (3) linear verschiebbaren Verstellplatte (30) mittels einer nierenförmigen Anformung (34) formschlüssig eingesetzt ist, der mittels einer von außen zugänglichen Betätigungsstange (35) in vertikaler Richtung bewegbar ist.

6. Lünette nach einem der vorgenannten Ansprüche,
**dadurch gekennzeichnet,**
**dass** die der Gehäuseschale (2) zugewandte Anformung (27) des Kraftübertragungselementes (15) eine in horizontaler Richtung sich erstreckende Schiene (36) aufweist, die in die Führungsnut (22) der Führungsleiste (16) der ersten Verstelleinrichtung (31) axial verschiebbar eingesetzt ist.

7. Lünette nach Anspruch 5 oder 6,
**dadurch gekennzeichnet,**
**dass** die Nut (28) in der Zustellplatte (20) eine größer bemessene Längserstreckung als die Längserstreckung der nierenförmigen Anformung (26) des Kraftübertragungselementes (15) aufweist und dass das Kraftübertragungselement (15) relativ zu der Übertragungsplatte (20) in Richtung der nutenförmigen Aussparung (21) bewegbar ist.

8. Lünette nach einem der vorgenannten Ansprüche,
**dadurch gekennzeichnet,**
**dass** in den mittleren Lünettenarm (6) eine etwa zu der Durchgangsöffnung (14) der Betätigungsstange (5) fluchtend angeordnete nutenförmige Aussparung (20) eingearbeitet ist, die von Teilen des Kraftübertragungselementes (15) in Richtung der Führungsleiste (17) der ersten Verstelleinrichtung (31) durchgriffen ist.

9. Lünette nach Anspruch 4,
**dadurch gekennzeichnet,**
**dass** die Führungsnut (19) in einem Winkel von 3° bis 10° aus der Horizontalen geneigt in der Gehäuseschale (3) eingearbeitet ist, dass die Führungsnut (23) zu dem Einbauzustand der Führungsleiste (17) unter einem gleich groß bemessenen und gegenläufig dazu geneigten Winkel angeordnet ist, und dass eine Schiene (33) im Wesentlichen parallel verschiebbar zu der Längsachse in der Führungsnut (23) eingesetzt ist.

10. Lünette nach Anspruch 5,
**dadurch gekennzeichnet,**
**dass** die Führungsnut (18) in einem Winkel von 3° bis 10° aus der Horizontalen geneigten in die Gehäuseschale (2) eingearbeitet ist, dass die in die Führungsleiste (16) eingearbeitete Führungsnut (22) in einem gleich groß bemessenen und gegenläufig oder kreuzweise dazu versetzten Winkel verläuft und dass die in die Führungsnut (22) eingesetzte Schiene (36) parallel zu der Längsachse verschiebbar ist.

## Claims

1. A stationary support (1) for centring a rotationally symmetrical workpiece (12) in the space, consisting of a housing shell (2) and a housing cover (3) that are firmly connected together and which form an interior space (4),
- consisting of a guide slide (7) mounted in an axially adjustable arrangement in the interior space (4) and of an actuator rod (5) that is in a positive connection with the guide slide (7),
- consisting of two control surfaces (8) formed facing opposite to one another on the guide slide (7), in which case the control surfaces (8) are configured so that the guide slide (7) chiefly has a triangular cross-sectional contour, one triangle tip of which points towards the workpiece (12) and the opposite two triangle tips of which point towards the actuator rod (5),
- consisting of a middle stationary support arm (6) that is in a driving connection with the actuator rod (5) and
- consisting of two outer stationary support arms (9, 10) each arranged on the side next to the middle stationary support arm (6), which are mounted in a swivelling arrangement in the housing shell (2) and/or the housing cover (3), and the first free end (11) of which is in contact with the control surface (8) of the guide slide (7), with the second free end (13) on the opposite side in firm contact with the workpiece (12) to be clamped, thus forming a three-point mounting together with the middle stationary support arm (6) in order to hold the workpiece (12),
**characterised in that,**
the actuator rod (5) has a passage opening (14) worked into it, into which a force transmission element (15) is inserted, and that the force transmission element (15) with a first adjustment device (31) is in a form-locking active connection with the control cam (8) of the guide slide (7) by means of an intermediate element (16, 20) in such a way that when the workpiece (12) is clamped, the first adjustment device (31) is able to move the two outer support arms (9, 10) by means of the control cam (8) in a swivelling movement about the bearing pin (25) and the middle stationary support arm (6) by means of the force transmission element (15) jointly and synchronously in relation to one another in their particular position for aligning the workpiece (12) in the clamped condition in the direction of the middle stationary support arm (6), and/or that a second adjustment device (32) is in a sliding connection with the force transmission element (15) by means of intermediate elements (17, 38), and that the movement of the intermediate elements (17, 38) is able to change the position of the control cam (8) in the vertical plane in relation to the middle stationary support arm (6) for positioning the two outer stationary support arms (9, 10) and for changing the position of the workpiece (12) in the damped position in the vertical plane in relation to the middle stationary support arm (6) and in the plane formed by the two outer stationary support arms (9, 10).

2. The stationary support in accordance with Claim 1,
**characterised in that,**
two kidney-shaped mouldings (26, 27) are provided on the force transmission element (15) that run opposite to and intersecting one another, and face towards the housing shell (2) or the housing cover (3).

3. The stationary support in accordance with Claim 1 or 2,
**characterised in that,**
the force transmission element (15) decouples the adjustment forces arising from the two adjustment devices (31 and/or 32) and this decoupling is achieved **in that** the horizontally acting force proportion of the first adjustment device (31) and the vertical force proportion of the second adjustment device (32) act alternately or jointly on the force transmission element (15) and that the force transmission element (15) provides a relative movement between the first and the second adjustment device (31, 32) or their particular intermediate elements (16, 17, 20, 30, 35).

4. The stationary support in accordance with the aforementioned claims,
**characterised in that,**
the horizontal adjustment device (31) consists of an actuator rod (35) arranged in the housing shell (2) at right angles to the movement direction of the actuator rod (5) and mounted in a movable arrangement therein, on the free end of which actuator rod (35) facing towards the interior space (4) an adjustment plate (30) is formed, that the adjustment plate (30) has a kidney-shaped moulding (34) formed onto it which is angled out of the horizontal plane and faces away from the workpiece (12), that the housing shell (2) has a guide groove (18) worked into it which is angled out of the horizontal plane, into which guide groove (18) an axially adjustable guide strip (16) is inserted which itself has a guide groove (22) worked into it which is angled out of the horizontal plane, adapted to the moulding (34), in a positive-locking connection with the adjustment plate (30) and runs in an intersecting path or angled opposite to the guide groove (18), that the guide strip (16) is firmly connected to the middle stationary support arm (6) in the assembled condition, and that the force transmission element (15) has a rail formed on it which is mounted in the guide groove (22) in an axially adjustable arrangement in parallel to the lengthways axis.

5. The stationary support in accordance with one of the aforementioned claims,
**characterised in that,**
the force transmission element (15) has a kidney-shaped moulding (26) for vertical adjustment of the workpiece (12) on the side opposite to the actuator rod (5), in which case the moulding (26) is inserted in a feed plate (20) which has a holding groove (28) corresponding to the moulding (26) worked into it, that the feed plate (20) is inserted in an opening (21) worked into the guide slide (7), that the moulding (27) of the force transmission element (15) projects from the plane formed by the guide slide (7) and the feed plate (20), and is inserted in a positive-looking arrangement in a guide strip (17) which has a guide groove (23) worked into it running at an angle out of the horizontal plane, that the guide strip (17) is mounted in an axially adjustable arrangement in a guide groove (19) worked into the housing cover (3) at an angle running opposite to or intersecting the guide groove (19), and that the guide strip (17) has an adjustment groove (24) running at an angle into which an adjustment plate (30) that can be moved in a linear direction on the housing cover (3) is inserted with a positive-locking connection being provided by a kidney-shaped moulding (34), that can be moved in a vertical direction by means of an externally accessible actuator rod (35).

6. The stationary support in accordance with one of the aforementioned claims,
**characterised in that,**
the moulding (27) of the force transmission element (15) facing the housing shell (2) has a rail (36) running in a horizontal direction which is inserted in an axially adjustable arrangement in the guide groove (22) of the guide strip (16) of the first adjustment device (31).

7. The stationary support in accordance with Claims 5 or 6,
**characterised in that,**
the groove (28) in the feed plate (20) has a larger lengthways extent than the lengthways extent of the kidney-shaped moulding (26) of the force transmission element (15) and that the force transmission element (15) can be moved relative to the feed plate (20) towards the groove-shaped opening (21).

8. The stationary support in accordance with one of the aforementioned claims,
**characterised in that,**
the middle stationary support arm (6) has a groove-shaped opening (20) worked into it which is arranged approximately flush with the passage opening (14) of the actuator rod (5), with parts of the force transmission element (15) passing through the opening (20) in the direction of the guide strip (17) of the first adjustment device (31).

9. The stationary support in accordance with Claim 4,
**characterised in that,**
the guide groove (19) is worked into the housing shell (3) at an angle of 3° to 10° from the horizontal plane, that the guide groove (23) is arranged in relation to the installation condition of the guide strip (17) at an angle that is of the same magnitude but opposite to the former angle, and that a rail (33) which is chiefly movable in parallel to the lengthways axis is inserted into the guide groove (23).

10. The stationary support in accordance with Claim 5,
**characterised in that,**
the guide groove (18) is worked into the housing shell (2) at an angle of 3° to 10° from the horizontal plane, that the guide groove (22) worked into the guide strip (16) runs at an angle that is of the same magnitude and opposite to or intersecting the former angle, and that the rail (36) inserted into the guide groove (22) is movable in parallel to the lengthways axis.

## Revendications

1. Lunette (1) pour le centrage d'une pièce à usiner à symétrie de rotation (12) dans l'espace, comprenant un boîtier (2) et un couvercle (3) fixés ensemble et formant un intérieur (4),
- un chariot de guidage (7) axialement déplaçable dans l'intérieur (4) et une tige d'actionnement (5) liée par engagement positif avec le chariot de guidage (7),
- deux faces de commande (8) opposées l'une à l'autre et formées sur le chariot de guidage (7) de sorte que le chariot de guidage (7) ait essentiellement un contour transversal triangulaire dont une pointe du triangle donne sur la pièce à usiner (12) et les deux pointes de triangle opposées sur la tige d'actionnement (5),
- un bras de lunette central (6) lié par entraînement avec la tige d'actionnement (5),
- deux bras de lunette extérieurs (9, 10) disposés respectivement sur le côté du bras de lunette central (6) logés de manière à se laisser pivoter dans le boîtier (2) et/ou le couvercle (3) et dont respectivement la première extrémité libre (11) porte sur la face de commande (8) du chariot de guidage (7), dont la deuxième extrémité libre opposée (13) porte rigidement sur la pièce à usiner serrée (12) et qui, ensemble avec le bras de lunette central (6), forment un appui tripode pour le retient de la pièce à usiner (12),
**caractérisée en ce que**
dans la tige d'actionnement (5), il est pratiqué une ouverture de passage (14) dans laquelle il est inséré un élément de transmission de force (15), que l'élément de transmission de force (15) avec un premier équipement de réglage (31) est lié, via l'élément intermédiaire (16, 20), par engagement positif avec la courbe de commande (8) du chariot de guidage (7), que, ensemble et synchronisés dans leur position respective, une fois la pièce à usiner (12) serrée, le premier équipement de réglage (31) déplace les deux bras de lunette extérieurs (9, 10) par l'intermédiaire de la courbe de commande (8) dans un mouvement de pivotement autour du boulon palier (25) en direction du bras de lunette central (6), et que, pour l'alignement de la pièce à usiner serrée (12), le bras de lunette central (6) se laisse déplacer, via l'élément de transmission de force (15), et/ou qu'un deuxième équipement de réglage (32) est lié de manière glissante, via les éléments intermédiaires (17, 38) avec l'élément de transmission de force (15), et que par le mouvement des éléments intermédiaires (17, 38), la courbe de commande (8) se laisse mouvoir perpendiculairement sur le bras de lunette central (6) en vue du positionnement des deux bras de lunette extérieurs (9, 10), et pour le changement de la position de la pièce à usiner serrée (12) perpendiculairement sur le bras de lunette central (6) et dans le plan formé par les deux bras de lunette extérieurs (9, 10).

2. Lunette d'après la revendication 1
**caractérisée en ce que**
sur l'élément de transmission de force (15), il est formé deux embouts réniformes (26, 27) opposées et en croix l'un par rapport à l'autre, qui donnent sur le boîtier (2) ou le couvercle (3).

3. Lunette d'après les revendications 1 ou 2
**caractérisée en ce que**
l'élément de transmission de force (15) permet de découpler les forces de réglage provenant des deux équipements de réglage (31 et/ou 32) de sorte que la partie de force horizontale exercée par le premier équipement de réglage (31) et la partie de force verticale exercée par le deuxième équipement de réglage (32) agissent alternativement ou ensemble sur l'élément de transmission de force (15) et que l'élément de transmission de force (15) provoque un mouvement relatif entre le premier et le deuxième équipement de réglage (31, 32) ou leurs éléments intermédiaires respectifs (16, 17,20,30, 35).

4. Lunette d'après une des revendications précédentes
**caractérisée en ce que**
l'équipement de réglage horizontal (31) consiste d'une tige de commande (35) logée dans le boîtier (2) perpendiculairement sur le sens de déplacement de la tige de commande (5) et de manière déplaçable dans celle-ci, et que sur son extrémité libre et donnant sur l'intérieur (4), il est formé une plaque de réglage (30), que sur la plaque de réglage (30) il est pratiqué un embout réniforme (34) incliné par rapport au plan horizontal et détourné de la pièce à usiner (12), que dans le boîtier (2), il est pratiqué une gorge de guidage (18) inclinée sous un certain angle par rapport au plan horizontal, dans laquelle il est inséré de manière déplaçable une barre de guidage (16), dans laquelle il est pratiqué une gorge de guidage (22) inclinée par rapport au plan horizontal et adaptée à l'embout (34) qui est liée par engagement positif avec la plaque de réglage (30) et orientée en croix ou inclinée en sens contraire par rapport à la gorge de guidage (18), qu'en état monté, la barre de guidage (16) est rigidement liée au bras de lunette central (6) et que sur l'élément de transmission de force (15), il est formé une glissière (36) logé de manière axialement déplaçable parallèlement à l'axe longitudinal dans la gorge de guidage (22).

5. Lunette d'après une des revendications précédentes
**caractérisée en ce que**
pour le réglage vertical de la pièce à usiner (12), l'élément de transmission de force (15) comporte sur l'extrémité opposée à la tige d'actionnement (5), un embout réniforme (26) inséré dans une plaque d'avance (20) dans laquelle il est pratiqué une gorge de réception (28) correspondant à l'embout (26), que la plaque d'avance (20) est insérée dans un évidement (21) pratiqué dans le chariot de guidage (7), que l'embout (27) de l'élément de transmission de force (15) saille du plan formé par le chariot de guidage (7) et la plaque d'avance (20) et est prévu par engagement positif dans une barre de guidage (17) dans laquelle il est pratiqué une gorge de guidage (23) inclinée par rapport au plan horizontal, que la barre de guidage (17) est logée dans une gorge de guidage (19) pratiquée dans le couvercle (3) de manière axialement déplaçable, sous un angle incliné dans le sens opposé ou en croix par rapport à la gorge de guidage (19), et que la barre de guidage (17) comporte une gorge de réglage inclinée (24) dans laquelle il est inséré par engagement positif, moyennant un embout réniforme (34), une plaque de réglage (30) qui se laisse déplacer en sens linéaire dans le couvercle (3), et qui se laisse déplacer en direction verticale moyennant une tige d'actionnement (35) accessible de l'extérieur.

6. Lunette d'après une des revendications précédentes
**caractérisée en ce que**
l'embout (27) de l'élément de transmission de force (15) donnant sur le boîtier (2) comporte une glissière horizontale (36) insérée de manière axialement déplaçable dans la gorge de guidage (22) de la barre de guidage (16) du premier équipement de réglage (31).

7. Lunette d'après les revendications 5 ou 6
**caractérisée en ce que**
la longueur en direction longitudinale de la gorge (28) dans la plaque d'avance (20) est plus grande que la longueur en direction longitudinale de l'embout réniforme (26) de l'élément de transmission de force (15) et que l'élément de transmission de force (15) se laisse déplacer relativement par rapport à la plaque d'avance (20) en direction de l'évidement (21) sous la forme d'une gorge.

8. Lunette d'après une des revendications précédentes
**caractérisée en ce que**
dans le bras de lunette central (6), il est pratiqué un évidement réniforme (21) en alignement à peu près précis par rapport à l'ouverture de passage (14) de la tige d'actionnement (5), qui est traversé par des parties de l'élément de transmission de force (15) en direction de la barre de guidage (17) du premier équipement de réglage (31).

9. Lunette d'après la revendication 4
**caractérisée en ce que**
la gorge de guidage (19) est pratiquée inclinée sous un angle de 3° à 10° par rapport au plan horizontal dans le boîtier (3), que la gorge de guidage (23) est arrangée sous un angle égal et incliné dans le sens opposé par rapport à la barre de guidage (17) en état monté, et que la glissière (33) est insérée de manière à se laisser déplacer essentiellement en parallèle par rapport à l'axe longitudinal dans la gorge de guidage (23).

10. Lunette d'après la revendication 5
**caractérisée en ce que**
la gorge de guidage (18) est pratiquée inclinée sous un angle de 3° à 10° par rapport au plan horizontal dans le boîtier (2), que la gorge de guidage (22) pratiquée dans la barre de guidage (16) s'étend sous un angle égal et incliné dans le sens opposé ou en croix, et que la glissière (36) insérée dans la gorge de guidage (22) se laisse déplacer parallèlement par rapport à l'axe longitudinal.
